# EUROPÄISCHE PATENTSCHRIFT

(11) **EP 3 762 157 B1**
(45) Veröffentlichungstag und Bekanntmachung des Hinweises auf die Patenterteilung: **13.03.2024**
(21) Anmeldenummer: 19709032.7
(22) Anmeldetag: 05.03.2019
(51) Int. Cl.: B08B 3/02, A22C 21/00, A22C 25/00

(54) **REINIGUNGSVORRICHTUNG, ANORDNUNG UND VERFAHREN ZUM REINIGEN VON MASCHINEN ZUR BE- UND VERARBEITUNG VON GEFLÜGEL ODER FISCH.**
CLEANING DEVICE, ARRANGEMENT AND METHOD FOR CLEANING MACHINES FOR HANDLING AND PROCESSING POULTRY OR FISH
DISPOSITIF DE NETTOYAGE, AGENCEMENT ET PROCÉDÉ POUR LE NETTOYAGE DE MACHINES DE TRAITEMENT ET DE TRANSFORMATION DE VOLAILLE OU DE POISSON

(30) Priorität: 09.03.2018 DE 102018105456
(43) Veröffentlichungstag der Anmeldung: 13.01.2021
(73) Patentinhaber: NORDISCHER MASCHINENBAU RUD. BAADER GMBH + CO KG, 23560 Lübeck (DE)
(72) Erfinder: PAULSOHN, Carsten, 23568 Lübeck (DE); DANN, Andreas, 23569 Lübeck (DE); HOLTZ, Jörg, 23564 Lübeck (DE)
(74) Vertreter: Stork Bamberger Patentanwälte PartmbB
(86) Internationale Anmeldenummer: PCT/EP2019/055416
(87) Internationale Veröffentlichungsnummer: WO 2019/170655

(56) Entgegenhaltungen:
- WO-A1-2009/152324
- DE-A1- 2 526 323
- DE-B3-102015 101 616
- DE-U1- 8 631 399
- GB-A- 2 284 141
- NL-A- 9 000 810
- US-A1- 2008 029 129
- US-B1- 6 594 846

## Beschreibung

Die Erfindung betrifft eine Reinigungsvorrichtung, ausgebildet und eingerichtet zum Reinigen von Maschinen oder Teilen davon, umfassend ein Schlauchelement mit einem Schlauchhalter und einem davon abrollbaren bzw. darauf aufrollbaren Schlauch, wobei ein Versorgungsende des Schlauches zum Verbinden mit einem Wasserversorgungssystem und das gegenüberliegende Anschlussende des Schlauches zum Anschließen an eine Rohrkonstruktion, die mindestens eine Reinigungsdüse aufweist, ausgebildet und eingerichtet ist, und das Anschlussende des Schlauches aus einer Warteposition, in der das Anschlussende des Schlauches von der zu reinigenden Maschine oder Teilen davon entkoppelt ist, in eine Betriebsposition, in der das Anschlussende des Schlauches mit der zu reinigenden Maschine oder Teilen davon verbunden ist, und zurück bewegbar ist.

Die Erfindung ist des Weiteren auf eine Verwendung einer Reinigungsvorrichtung in Verbindung mit einer Maschine zur Be- und/oder Verarbeitung von Geflügel oder Fisch sowie Teilen davon gerichtet.

Die Erfindung betrifft auch eine Anordnung, umfassend mindestens eine Maschine zur Be- und/oder Verarbeitung von Geflügel oder Fisch sowie Teilen davon, sowie mindestens eine Reinigungsvorrichtung zur Reinigung der Maschine oder Teilen davon.

Weiterhin ist auch ein Verfahren zum Reinigen einer Maschine zur Be- und/oder Verarbeitung von Geflügel oder Fisch sowie Teilen davon Bestandteil der Erfindung.

Solche Reinigungsvorrichtungen kommen in allen Bereichen der industriellen Produktion zum Einsatz, in denen die Maschinen, Vorrichtungen, Einrichtungen oder dergleichen (im Folgenden als Maschinen bezeichnet) sowie Teile davon gereinigt werden müssen, die durch die Be- und/oder Verarbeitung von Produkten verunreinigt werden. Insbesondere in der Nahrungsmittel verarbeitenden Industrie, also u.a. in der Geflügel und Fisch verarbeitenden Industrie, ist das regelmäßige Reinigen der Maschinen oder Teilen davon unerlässlich, um den jeweiligen Hygienevorschriften zu genügen.

Üblicherweise sind die Maschinen oder Teile davon und insbesondere die Be- und/oder Verarbeitungsstationen durch ein Gehäuse oder dergleichen gegenüber der Umgebung abgeschirmt. Für die Reinigung der Maschine oder Teilen davon muss die Maschine grundsätzlich angehalten werden, also aus dem Betriebsmodus in den Reinigungsmodus gebracht werden, was zu Stillstandzeiten der Maschine und damit zu einer Leistungseinbuße führt. Entsprechend ist der Fokus darauf gerichtet, die Reinigung möglichst effektiv zu gestalten, ohne deren Reinigungsergebnis zu reduzieren.

Das Dokument US-A1-2008/029129 offenbart eine Reinigungsvorrichtung gemäß dem Oberbegriff des Anspruchs 1.

Es ist bekannt, die Maschinen oder Teile davon manuell zu reinigen. Im Stillstand der Maschine wird diese dazu geöffnet. Anders ausgedrückt wird das Gehäuse der Maschine geöffnet, so dass der zu reinigende Innenraum und/oder einzelne Be- und/oder Verarbeitungsstationen zugänglich gemacht und gereinigt werden können. Zum Reinigen können von einer Bedienperson übliche Reinigungshilfsmittel, wie zum Beispiel Wasserschläuche, Bürsten, Niederdruckreiniger oder dergleichen eingesetzt werden. Diese Möglichkeit der Reinigung ist jedoch einerseits zeitaufwendig und damit ineffizient und zum anderen bezüglich des Reinigungsergebnisses von der Bedienperson abhängig. Es sind daher Reinigungsvorrichtungen bekannt, bei denen Schlauchelemente vorgesehen sind, die einen auf- und abrollbarer Schlauch auf einem Schlauchhalter umfassen. Solche Schlauchelemente sind üblicherweise oberhalb der zu reinigenden Maschine positioniert und an ein Wasserversorgungssystem angeschlossen, beispielsweise einen üblichen Wasseranschluss oder ein Wasserniederdrucksystem. Das Wasserversorgungssystem steht synonym für ein Reinigungsmediumversorgungssystem. In Fällen, in denen die Reinigung durch Wasser nicht möglich oder nachteilig ist, kann der Schlauch z.B. auch an ein Luft- bzw. Druckluftsystem angeschlossen sein.

Voraussetzung für das Reinigen von Maschinen oder Teilen davon mit solchen Schlauchelementen ist allerdings, dass innerhalb der Maschine eine Rohrkonstruktion, ein so genannter Düsenstock, vorhanden ist. Diese Rohrkonstruktion weist mindestens eine Reinigungsdüse auf. Die Rohrkonstruktion ist fest innerhalb der Maschine oder an der Maschine installiert und damit fester Bestandteil der Maschine selbst. Das bedeutet, dass die Rohrkonstruktion sowohl im Reinigungsmodus der Maschine als auch in deren Betriebsmodus in der Maschine verbleibt. Zum Reinigen der Maschine oder Teilen davon ist in einigen Fällen die in der Maschine installierte Rohrkonstruktion fest, also im Reinigungsmodus und im Betriebsmodus, mit einem Rohrsystem oder dergleichen verbunden, das an das Wasserversorgungssystem angeschlossen ist. Durch Öffnen eines Kugelhahns oder dergleichen wird der Reinigungsvorgang gestartet. In anderen Fällen wird das Anschlussende eines Schlauches im Stillstand der Maschine und bei geöffnetem Gehäuse aus der Warteposition in die Betriebsposition bewegt und an die in der Maschine fest und dauerhaft montierte Rohrkonstruktion angeschlossen. Im Reinigungsmodus der Maschine ist demnach eine Verbindung zwischen dem Schlauch und der Rohrkonstruktion hergestellt. Nach dem Reinigungsprozess wird das Anschlussende des Schlauches wieder von der Rohrkonstruktion entkoppelt und in die Warteposition bewegt. Anschließend wird die Maschine - zusammen mit der sich innerhalb der Maschine befindlichen Rohrkonstruktion - wieder in Betrieb gesetzt. Im Betriebsmodus der Maschine ist die Verbindung zwischen dem Schlauch und der Rohrkonstruktion entsprechend gelöst. Bei sämtlichen bekannten Lösungen wird die Rohrkonstruktion beim Betrieb der Maschine durch die Be- und/oder Verarbeitung der Produkte ebenfalls durch diese verunreinigt. Am Beispiel der Be- und/oder Verarbeitung von Nahrungsmitteln werden demnach nicht nur der Maschineninnenraum und die oder jede Be- und/oder Verarbeitungsstation verunreinigt, sondern explizit auch die Rohrkonstruktion. Damit vergrößert sich die zu reinigende Oberfläche und erhöht sich der Anteil der zu reinigenden Komponenten, wodurch sich die Reinigungszeit, und damit die Stillstandzeit der Maschine, verlängert. Ein weiterer Nachteil besteht darin, dass durch die Rohrkonstruktion und die Reinigungsdüsen, insbesondere bedingt durch deren konstruktive Ausgestaltung, zusätzliche und insbesondere schwer zugängliche Bereiche entstehen, in denen sich Verunreinigungen, z.B. in Form von Nahrungsmittelresten, ansammeln und die Keimbildung und andere unerwünschte Effekte verstärken. Solche Bereiche müssen entsprechend separat nachgereinigt werden, was zusätzlichen Zeitaufwand erfordert. Nachteilig an der bekannten Lösung ist auch die Tatsache, dass nur solche Maschinen oder Teile davon gereinigt werden können, die konstruktiv durch das Vorsehen einer Rohrkonstruktion entsprechend vorbereitet und angepasst sind.

Der Erfindung liegt somit die Aufgabe zugrunde, eine einfach handzuhabende Reinigungsvorrichtung zu schaffen, die ein schnelles und effektives Reinigen der Maschine oder Teilen davon gewährleistet. Der Erfindung liegt weiterhin die Aufgabe zugrunde, eine entsprechende Anordnung sowie ein entsprechendes Verfahren zu schaffen. Diese Aufgabe wird gelöst durch die Reinigungsvorrichtung gemäß Anspruch 1, und das Verfahren zum Reinigen gemäß Anspruch 13.

Diese Aufgabe wird durch eine Reinigungsvorrichtung der eingangs genannten Art dadurch gelöst, dass die Rohrkonstruktion Bestandteil der Reinigungsvorrichtung ist, derart, dass die Rohrkonstruktion sowohl im Betriebsmodus der Maschine als auch im Reinigungsmodus der Maschine mit dem Anschlussende des Schlauches verbunden ist, wobei die Rohrkonstruktion zum lösbaren Befestigen innerhalb einer Maschine ausgebildet und eingerichtet ist und zusammen mit dem Anschlussende des Schlauches aus der Warteposition in die Betriebsposition und zurück bewegbar ist. Die Rohrkonstruktion ist demnach dauerhaft mit dem Anschlussende des Schlauches verbunden, wobei sich dauerhaft auf die Modi der Maschine bezieht. Selbstverständlich ist die Rohrkonstruktion zum Beispiel für deren Wartung, einen Austausch oder dergleichen, vom Schlauch zu lösen. Mit der erfindungsgemäßen Ausbildung wird die Anzahl der zu reinigenden Komponenten innerhalb der Maschine deutlich reduziert. Besonders vorteilhaft ist, dass zusätzliche Keimnester oder dergleichen innerhalb der Maschine vermieden werden, da die Rohrkonstruktion während des Betriebsmodus der Maschine außerhalb der Maschine platziert ist und entsprechend selbst keinen Verunreinigungen durch die Be- und/oder Verarbeitung der Produkte ausgesetzt ist. Auch die oder jede Reinigungsdüse ist keinerlei Verunreinigungen durch den Betriebsmodus ausgesetzt, so dass Anlaufprobleme vermieden werden. Die erfindungsgemäße Reinigungsvorrichtung ermöglicht somit eine einfache, schnelle und dennoch besonders effiziente Reinigung der Maschine oder Teilen davon. Ein weiterer Vorteil besteht darin, dass die Reinigungsvorrichtung quasi maschinenunabhängig einsetzbar ist, da alle Komponenten für eine effektive und schnelle Reinigung Bestandteil der Reinigungsvorrichtung sind. Anders ausgedrückt ist die erfindungsgemäße Reinigungsvorrichtung unabhängig von anderen Komponenten individuell zum Reinigen von beliebigen Maschinen oder Teilen davon einsetzbar.

Vorteilhafterweise ist die Rohrkonstruktion fest aber lösbar mit dem Anschlussende des Schlauches verbunden und in der Warteposition zusammen mit dem freien Ende des Schlauches frei bewegbar ausgebildet. Frei bewegbar bezieht sich dabei auf den Bewegungsspielraum, den das - üblicherweise frei hängende - Anschlussende des Schlauches gewährt. Während des Betriebsmodus der Maschine befindet sich die Reinigungsvorrichtung einschließlich Rohrkonstruktion vollständig und als Einheit außerhalb und vorzugsweise oberhalb der Maschine. Die Rohrkonstruktion hängt am freien Ende des Schlauches oberhalb der Maschine und ist mit dem Anschlussende des Schlauches verbunden. Der Schlauch ist auf dem Schlauchhalter aufgerollt. Mit dem Versorgungsende ist der Schlauch direkt oder über den Schlauchhalter mit dem Wasserversorgungssystem verbunden. Im Reinigungsmodus der Maschine wird die Rohrkonstruktion bei abrollendem Schlauch innerhalb der Maschine platziert. Durch die freie Bewegbarkeit von Rohrkonstruktion zusammen mit dem Anschlussende des Schlauches kann auf einfache und schnelle Weise aus der Warteposition im Rahmen der Länge des Schlauches eine beliebige Betriebsposition innerhalb der Maschine erreicht werden, an der die Reinigung ausgeführt werden soll.

Vorteilhafterweise umfasst die Rohrkonstruktion mindestens ein Reinigungsrohr und mindestens eine Reinigungsdüse. Dadurch wird eine effektive Reinigung erreicht. In einer bevorzugten Ausführungsform umfasst die Rohrkonstruktion mehrere Reinigungsrohre und mehrere Reinigungsdüsen, wodurch sich die Effektivität der Reinigungsvorrichtung erhöht und insbesondere mehrere Bereiche der Maschine oder Teile davon zeitgleich gereinigt werden können.

Eine besonders bevorzugte Ausführungsform ist dadurch gekennzeichnet, dass die Rohrkonstruktion modular ausgebildet bzw. aufgebaut ist, derart, dass sie bezüglich der Anzahl der Reinigungsrohre und/oder der Anzahl der Reinigungsdüsen sowie der Position und/oder Ausrichtung derselben variabel ist. Beispielsweise kann die Rohrkonstruktion als eine Art Stecksystem ausgebildet sein, um die Länge und/oder Größe der Rohrkonstruktion und deren Ausrichtung zu verändern und insbesondere die Austrittsstellen des Wassers (oder jedes anderen Reinigungsmediums) bezüglich Anzahl und Ausrichtung an die jeweils zu reinigende Maschine und deren Konstruktion anpassen zu können. Dadurch ist eine individuelle Reinigungsvorrichtung geschaffen, die ein schnelles und effektives Reinigen unterschiedlicher Maschinen oder Teilen davon, z.B. nach einer Maschinenumrüstung oder nach einem vollständigen Maschinenwechsel, ermöglicht.

Zweckmäßigerweise ist die oder jede Reinigungsdüse bewegbar an dem oder jedem Reinigungsrohr angeordnet, derart, dass deren Position und/oder Ausrichtung variabel einstellbar ist. Dadurch lassen sich die weiter oben beschriebenen Vorteile noch weiter verstärken.

Erfindungsgemäß sind der Rohrkonstruktion Befestigungsmittel zum lösbaren Befestigen an der oder innerhalb der zu reinigenden Maschine oder Teilen davon zuordnet. Diese Befestigungsmittel gewährleisten hilfsmittelfrei oder zusammen mit Hilfsmitteln eine schnelle und sichere Verbindung und Lösung der Rohrkonstruktion an der bzw. von der Maschine oder Teilen davon. Diese Befestigungsmittel sind maschinenunabhängig. Das bedeutet, dass maschinenseitig keine Anpassung oder dergleichen für eine sichere Verbindung mit der Rohrkonstruktion erforderlich ist. Dadurch ist eine einfache Handhabung gewährleistet.

In einer bevorzugten Ausführungsform umfasst das Befestigungsmittel einen Steck- und/oder Klemmmechanismus, der zum lösbaren Fixieren der Rohrkonstruktion an der oder in der Maschine oder Teilen davon ausgebildet und eingerichtet ist. Auch magnetische Elemente als Befestigungsmittel sind einsetzbar. Durch diese Ausführung kann ein schnelles und sicheres Verbinden und Lösen der Rohrkonstruktion erreicht werden.

In einer weiteren Ausführungsform weist die Rohrkonstruktion Befestigungsmittel auf, die ausgebildet und eingerichtet sind, mit korrespondierenden Befestigungsmitteln, die an oder in der Maschine oder Teilen davon angeordnet sind, zusammenzuwirken. Dadurch kann ebenfalls eine sichere und stabile Verbindung hergestellt werden, die schnell und einfach wieder zu lösen ist.

Vorteilhafterweise weist der Schlauchhalter einen Schlauchrollmechanismus auf, wobei der Schlauchrollmechanismus einen Rückholer und einen Gewichtsausgleicher umfasst. Solche Mechanismen, die auch als Federzug und Balancer bekannt sind, vereinfachen das Handling der Reinigungsvorrichtung, so dass eine effektive und schnelle Reinigung unterstützt wird.

Die Aufgabe wird auch durch eine Anordnung der eingangs genannten Art dadurch gelöst, dass die Reinigungsvorrichtung nach einem oder mehreren der Ansprüche 1 bis 10 ausgebildet und eingerichtet ist.

Die Aufgabe wird auch durch ein eingangs genanntes Verfahren durch die folgende Schritte gelöst: Versetzen der Maschine aus einem Betriebsmodus in einen Reinigungsmodus, Positionieren und Fixieren einer über ein Schlauchelement an ein Wasserversorgungssystem angeschlossenen Rohrkonstruktion an oder in der Maschine oder Teilen davon, indem die Rohrkonstruktion aus einer außerhalb der Maschine befindlichen Warteposition in die innerhalb der Maschine befindliche Betriebsposition bewegt wird, Durchführen des Reinigungsprozesses, Lösen und Entfernen der Rohrkonstruktion aus der Maschine, indem die Rohrkonstruktion aus der Betriebsposition in die Warteposition zurückbewegt wird, und Versetzen der Maschine aus dem Reinigungsmodus in den Betriebsmodus.

Die sich daraus ergebende Vorteile wurden bereits im Zusammenhang mit der Reinigungsvorrichtung beschrieben, weshalb zur Vermeidung von Wiederholungen auf die entsprechenden Passagen verwiesen wird.

Weitere zweckmäßige und/oder vorteilhafte Merkmale und Weiterbildungen zur Reinigungsvorrichtung, zur Verwendung der Reinigungsvorrichtung, zur Anordnung, die eine Maschine zur Be- und/oder Verarbeitung von Geflügel oder Fisch sowie Teilen davon sowie die Reinigungsvorrichtung umfasst, und zum Verfahren ergeben sich aus den Unteransprüchen und der Beschreibung. Besonders bevorzugte Ausführungsformen der Reinigungsvorrichtung und zur Anordnung sowie das Verfahren werden anhand der beigefügten Zeichnung näher erläutert. In der Zeichnung zeigt:
- Fig. 1: eine schematische Darstellung einer Reinigungsvorrichtung,
- Fig. 2: eine schematische Darstellung einer Anordnung, umfassend eine Maschine zur Be- und/oder Verarbeitung von Geflügel oder Fisch sowie Teilen davon sowie zwei Reinigungsvorrichtungen in Warteposition,
- Fig. 3: die Anordnung gemäß Figur 2, wobei sich die Rohrkonstruktionen der Reinigungsvorrichtungen in einer Zwischenposition befinden, und
- Fig. 4: die Anordnung gemäß der Figuren 2 und 3 mit den Rohrkonstruktionen der Reinigungsvorrichtungen in Betriebsposition.

Die in der Zeichnung dargestellten Reinigungsvorrichtungen und Anordnungen dienen zum Reinigen von Fischfiletiermaschinen oder dergleichen. In entsprechender Weise sind die Reinigungsvorrichtungen jedoch auch in anderen Maschinen der Fisch oder Geflügel be- und/oder verarbeitenden Industrie sowie in anderen Industriebereichen, in denen bei der Be- und/oder Verarbeitung von Produkten Verunreinigungen entstehen, einsetzbar.

Die dargestellte Reinigungsvorrichtung 10 ist zum Reinigen von Maschinen 20 oder Teilen davon ausgebildet und eingerichtet und umfasst ein Schlauchelement 11 mit einem Schlauchhalter 12 und einem davon abrollbaren bzw. darauf aufrollbaren Schlauch 13, wobei ein (durch den aufgerollten Schlauch abgedecktes und somit nicht explizit dargestelltes) Versorgungsende des Schlauches 13 zum Verbinden mit einem Wasserversorgungssystem und das gegenüberliegende, freie Anschlussende 14 des Schlauches 13 zum Anschließen an eine Rohrkonstruktion 15, die mindestens eine Reinigungsdüse 16 aufweist, ausgebildet und eingerichtet ist. Das Anschlussende 14 des Schlauches 13 ist aus einer Warteposition, in der das Anschlussende 14 des Schlauches 13 von der zu reinigenden Maschine 20 oder Teilen davon entkoppelt ist, in eine Betriebsposition, in der das Anschlussende 14 des Schlauches 13 mit der zu reinigenden Maschine 20 oder Teilen davon verbunden ist, und zurück bewegbar.

Diese Reinigungsvorrichtung 10 zeichnet sich erfindungsgemäß dadurch aus, dass die Rohrkonstruktion 15 Bestandteil der Reinigungsvorrichtung 10 ist, derart, dass die Rohrkonstruktion 15 sowohl im Betriebsmodus der Maschine 20 als auch im Reinigungsmodus der Maschine 20 mit dem Anschlussende 14 des Schlauches 13 verbunden ist, wobei die Rohrkonstruktion 15 zum lösbaren Befestigen innerhalb einer Maschine 20 ausgebildet und eingerichtet und zusammen mit dem Anschlussende 14 des Schlauches 13 aus der Warteposition in die Betriebsposition und zurück bewegbar ist.

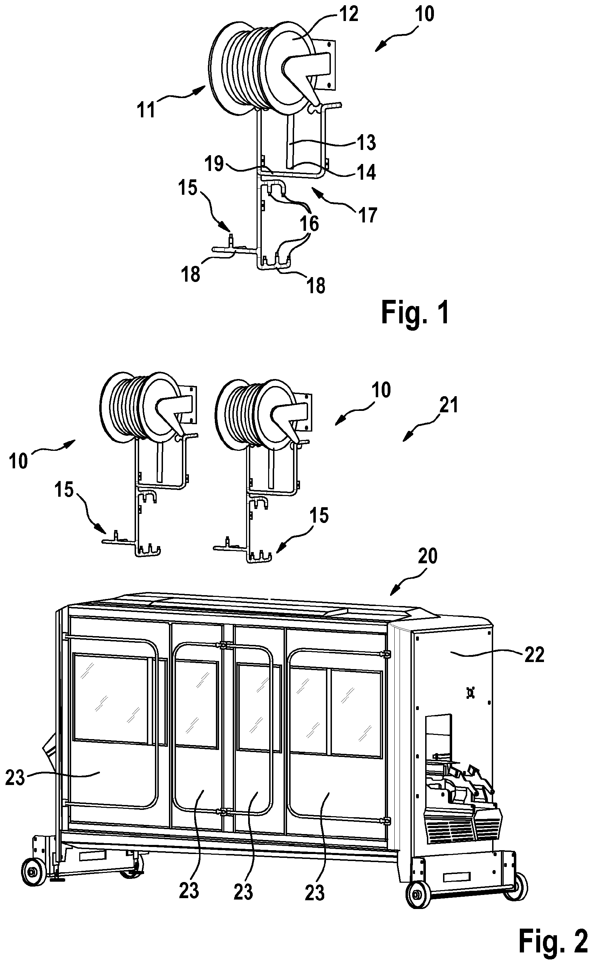

Die erfindungsgemäße Ausbildung der Reinigungsvorrichtung 10 lässt sich besonders deutlich anhand der Figuren 2 bis 4 erläutern. In der Figur 2 ist die Reinigungsvorrichtung 10 vollständig außerhalb der Maschine 20 und frei von jeder Verbindung zur Maschine 20 angeordnet, vorzugsweise oberhalb der Maschine 20. Dazu ist der Schlauchhalter 12 an einer Wand, einem Rahmen, Gestell oder dergleichen befestigt. Der Schlauch 13 ist mit seinem Versorgungsende direkt oder über den Schlauchhalter 12 mit dem Wasserversorgungssystem verbunden. Das freie Ende des Schlauches 13, also das Anschlussende 14, an dem die Rohrkonstruktion 15, die aufgrund ihrer äußeren Form auch als Geweih bezeichnet wird, angeordnet ist, hängt in der Warteposition. Der Schlauch 13 ist auf dem Schlauchhalter 12 aufgerollt. Die Maschine 20 selbst ist in geschlossenem Zustand und im Betriebsmodus.

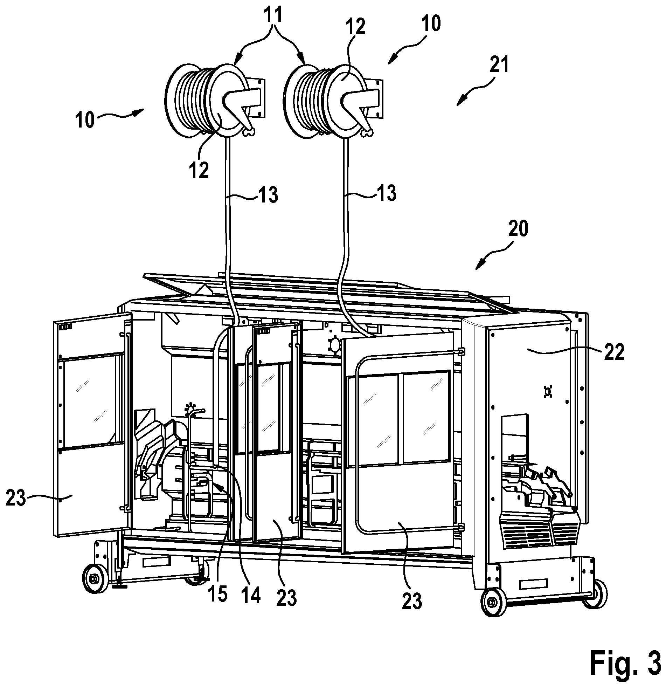

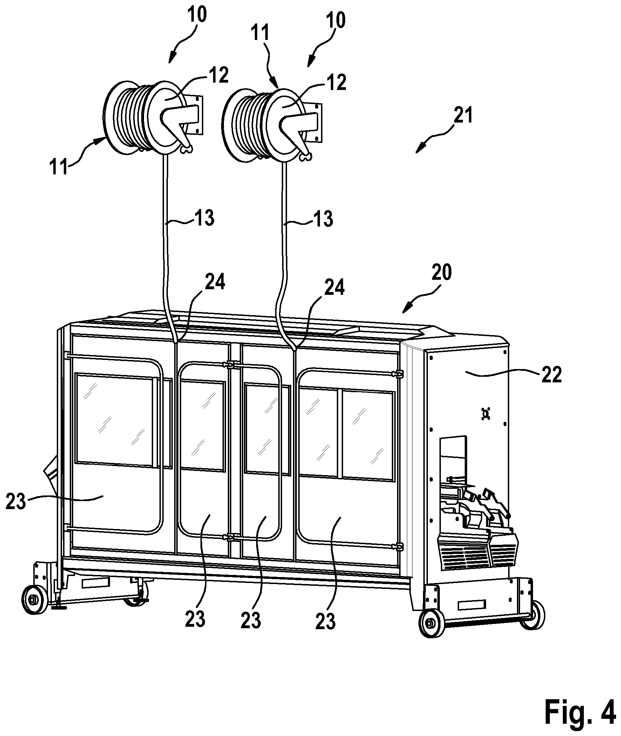

In der Figur 3 befindet sich die Maschine 20 in einem Zustand außer Betrieb, vorzugsweise zur Vorbereitung des Reinigungsmodus. Die Rohrkonstruktion 15 ist zusammen mit dem Anschlussende 14 aus der Warteposition in eine Betriebsposition bewegt, indem der Schlauch 13 mindestens teilweise abgerollt ist. Die Rohrkonstruktion 15 ist innerhalb der Maschine 20 angeordnet und fixiert. In der Figur 4 ist die Maschine 20 im Reinigungsmodus, mit der Rohrkonstruktion 15 innerhalb der Maschine 20. Nach dem Reinigungsprozess der Maschine 20 kann die Rohrkonstruktion 15 zusammen mit dem Anschlussende 14 wieder in die Warteposition gemäß Figur 2 bewegt werden. Die Verbindung zwischen dem Anschlussende 14 des Schlauches 13 und der Rohrkonstruktion 15 besteht dauerhaft, wird also weder im Reinigungsmodus der Maschine 20 noch im Betriebsmodus der Maschine 20 getrennt.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig die weiter oben beschriebene Reinigungsvorrichtung 10 weiterbilden können.

Zum Bewegen der Rohrkonstruktion 15 aus der Warteposition in die Betriebsposition und zurück ist die Rohrkonstruktion 15 bevorzugt fest aber lösbar mit dem Anschlussende 14 des Schlauches 13 verbunden und in der Warteposition zusammen mit dem freien Ende des Schlauches 13 frei bewegbar ausgebildet. In der Betriebsposition ist die Bewegbarkeit durch die Fixierung der Rohrkonstruktion 15 in oder an der Maschine 20 oder Teilen davon eingeschränkt. Zur Vereinfachung der Bewegbarkeit der Rohrkonstruktion 15 aus der Warteposition in die Betriebsposition ist im Anschlussbereich zwischen dem Anschlussende 14 des Schlauches 13 und der Rohrkonstruktion 15 ein Griffelement 17 angeordnet, das durch einen stabförmigen Bügel 19 gebildet wird. Andere Handhabungshilfen sind aber ebenfalls einsetzbar. Die Rohrkonstruktion 15 umfasst mindestens ein Reinigungsrohr 18 und mindestens eine Reinigungsdüse 16. Bevorzugt ist die Rohrkonstruktion 15 jedoch aus mehreren Reinigungsrohren 18 und mehreren Reinigungsdüsen 16 gebildet. Die Rohrkonstruktion 15 kann eine feste, unveränderbare Struktur aufweisen. Optional ist die Rohrkonstruktion 15 jedoch modular ausgebildet bzw. aufgebaut, derart, dass sie bezüglich der Anzahl der Reinigungsrohre 18 und/oder der Anzahl der Reinigungsdüsen 16 sowie der Position und/oder Ausrichtung derselben variabel ist. Die Reinigungsrohre 18 oder Abschnitte davon können parallel zueinander, quer zueinander oder in anderen Winkeln zueinander ausgerichtet sein. Entsprechend können die Reinigungsdüsen 16 unterschiedliche Ausrichtungen aufweisen. Die längs und/oder quer verlaufenden und miteinander verbundenen Reinigungsrohre 18 einerseits und die Positionierung und Ausrichtung der Reinigungsdüsen 16 an den Reinigungsrohren 18 andererseits verleihen der Rohrkonstruktion 15 das geweihartige Aussehen. In einzelnen Ausführungsformen können die Reinigungsdüsen 16 starr ausgebildet sein. Das bedeutet, dass der Austritt des Reinigungsmediums, vorzugsweise Wasser, nur in eine Richtung erfolgen kann. Vorzugsweise ist die oder jede Reinigungsdüse 16 jedoch bewegbar an dem oder jedem Reinigungsrohr 18 angeordnet, derart, dass deren Position und/oder Ausrichtung variabel einstellbar ist.

Erfindungsgemäß sind der Rohrkonstruktion 15 Befestigungsmittel zum lösbaren Befestigen an der oder innerhalb der zu reinigenden Maschine 20 oder Teilen davon zuordnet. In einzelnen Ausführungsformen umfasst das Befestigungsmittel einen Steck- und/oder Klemmmechanismus, der zum lösbaren Fixieren der Rohrkonstruktion 15 an der oder in der Maschine 20 oder Teilen davon ausgebildet und eingerichtet ist. Andere Befestigungsmittel, insbesondere auch Schnellverschlusssysteme, sind aber ebenfalls einsatzbar. Die Verbindung zwischen der Rohrkonstruktion 15 und der Maschine 20 oder Teilen davon kann auch mittels Magneten oder dergleichen als Befestigungsmittel hergestellt werden. Die beschriebenen Befestigungsmittel sind derart ausgebildet, dass sie einseitig an jede Maschine 20 oder Teile davon koppelbar sind. Einseitig bedeutet in diesem Zusammenhang, dass auf Seiten der Maschine 20 auf korrespondierende Ausbildungen und/oder Anpassungen und/oder Befestigungsmittel verzichtet werden kann. In anderen Ausführungsformen weist die Rohrkonstruktion 15 Befestigungsmittel auf, die ausgebildet und eingerichtet sind, mit korrespondierenden Befestigungsmitteln, die an oder in der Maschine 20 oder Teilen davon angeordnet sind, zusammenzuwirken.

Grundsätzlich ist es bekannt, einen Schlauchhalter 12 vorzusehen, auf dem der Schlauch 13 auf- und abrollbar ist. Selbstverständlich kann der Schlauch 13 auch ohne jeden Schlauchhalter 12 direkt mit dem Wasserversorgungssystem verbunden sein und ungeordnet aufbewahrt werden. Besonders bevorzugt weist das Schlauchelement 11 bzw. genauer der Schlauchhalter 12 jedoch einen Schlauchrollmechanismus auf, wobei der Schlauchrollmechanismus einen Rückholer und einen Gewichtsausgleicher umfasst. Andere Hilfsmittel zum Aufbewahren, Abrollen und Aufrollen des Schlauches 13 sind aber ebenfalls einsatzbar.

Die Reinigungsvorrichtung 10 ist grundsätzlich eine eigenständige und in sich funktionsfähige Vorrichtung. Bevorzugt wird die Reinigungsvorrichtung 10 jedoch im Zusammenhang mit Maschinen 20 eingesetzt, um diese zu reinigen. Besonders bevorzugt ist eine Verwendung der Reinigungsvorrichtung 10 nach einem oder mehreren der Ansprüche 1 bis 10 in einer Maschine 20 zur Be- und/oder Verarbeitung von Geflügel oder Fisch sowie Teilen davon. Letztlich ist die Reinigungsvorrichtung 10 jedoch im Zusammenspiel mit jeder beliebigen Maschine 20 oder Teilen davon verwendbar.

Wie erwähnt, ist eine Verwendung der Reinigungsvorrichtung 10 bevorzugt im Zusammenhang mit mindestens einer Maschine 20 zur Be- und/oder Verarbeitung von Produkten vorgesehen. Die Figuren 2 bis 4 zeigen jeweils eine Anordnung 21, die eine Maschine 20 zur Be- und/oder Verarbeitung von Geflügel oder Fisch sowie Teilen davon, sowie mindestens eine Reinigungsvorrichtung 10 zur Reinigung der Maschine 20 oder Teilen davon umfasst. In der konkreten Ausführungsform sind zwei Reinigungsvorrichtungen 10 vorgesehen. Die Maschine 20 weist ein Gehäuse 22 auf, das im Betriebsmodus und im Reinigungsmodus geschlossen ist. Zum Ankoppeln der Rohrkonstruktion 15 sowie zum Abkoppeln desselben ist das Gehäuse 22 geöffnet. Dazu weist das Gehäuse 22 Türelemente 23, Klappenelemente, Schiebeelemente oder dergleichen auf. Das Gehäuse 22 weist des Weiteren Öffnungen 24 zum Durchtritt des oder jedes Schlauches 13 bei geschlossenem Gehäuse 22 auf. Erfindungsgemäß ist diese oder jede Reinigungsvorrichtung 10 nach einem oder mehreren der Ansprüche 1 bis 10 ausgebildet und eingerichtet.

Die Maschine 20 oder Teile davon können Befestigungsmittel umfassen, die zum lösbaren Fixieren der Rohrkonstruktion 15 der Reinigungsvorrichtung 10 an der oder in der Maschine 20 oder Teilen davon ausgebildet und eingerichtet sind. Die Befestigungsmittel können aber auch dazu ausgebildet und eingerichtet sein, mit Befestigungsmitteln, die an der Rohrkonstruktion 15 angeordnet sind, zusammenzuwirken.

Im Folgenden wird das Verfahren zum Reinigen von Maschinen zur Be- und/oder Verarbeitung von Geflügel oder Fisch sowie Teilen davon anhand der Figurenfolge 2 bis 4 näher beschrieben.

Die Erfindung geht bei dem Verfahren davon aus, dass die Anordnung 21 im regulären Produktionsbetrieb eingesetzt wird. Das bedeutet, dass sich Produktion (Betriebsmodus der Maschine 20) und Reinigung (Reinigungsmodus der Maschine 20) abwechseln. Das Versetzen der Maschine 20 in den Reinigungsmodus einerseits und zurück in den Betriebsmodus andererseits kann auch zeitversetzt zum eigentlichen Reinigungsprozess erfolgen. Entscheidend für die Durchführung des Reinigungsprozesses ist es, dass die Maschine 20 zum Einleiten des Reinigungsprozesses, also zum Bewegen der Rohrkonstruktion 15 aus der Warteposition in die Betriebsposition und Befestigen an oder in der Maschine 20 oder Teilen davon, zum Durchführen des eigentlichen Reinigungsprozesses, und zum Beenden des Reinigungsprozesses, also zum Lösen und Entfernen der Rohrkonstruktion 15 von der Maschine 20 oder Teilen davon sowie zum Bewegen aus der Betriebsposition in die Warteposition, außer Betrieb ist. Für den üblichen Fall, dass die Maschine 20 ein Gehäuse 22 umfasst, wird dieses beim Bewegen der Rohrkonstruktion 15 in die Maschine 20 und beim Bewegen aus der Maschine 20 entsprechend geöffnet und wieder geschlossen.

Konkret wird die Maschine 20 aus einem Betriebsmodus in einen Reinigungsmodus versetzt. Nach dem Öffnen des Gehäuses 22 wird eine über ein Schlauchelement 11 an ein Wasserversorgungssystem angeschlossene Rohrkonstruktion 15 an oder in der Maschine 20 oder Teilen davon positioniert und fixiert, indem die Rohrkonstruktion 15 aus einer außerhalb der Maschine 20 befindlichen Warteposition in die innerhalb der Maschine 20 befindliche Betriebsposition bewegt wird. Nach dem Schließen des Gehäuses 22 wird der eigentliche Reinigungsprozess durchgeführt. Nach dem Reinigen der Maschine 20 oder Teilen davon wird das Gehäuse 22 wieder geöffnet und die Rohrkonstruktion 15 wird gelöst und aus der Maschine 20 entfernt, indem die Rohrkonstruktion 15 aus der Betriebsposition in die Warteposition zurückbewegt wird. Sobald die Rohrkonstruktion 15 wieder vollständig in der Warteposition ist, also die Maschine 20 vollständig verlassen hat, kann das Gehäuse 22 wieder geschlossen werden, so dass die Maschine 20 wieder aus dem Reinigungsmodus in den Betriebsmodus versetzt werden kann.

Das Handling der Rohrkonstruktion 15 wird wesentlich durch das Griffelement 17 und den Federzug sowie den Balancer vereinfacht.

Besonders bevorzugt wird das Verfahren mit einer Reinigungsvorrichtung 10 nach einem oder mehreren der Ansprüche 1 bis 9 ausgeführt.

## Patentansprüche

1. Reinigungsvorrichtung (10), ausgebildet und eingerichtet zum Reinigen von Maschinen (20) oder Teilen davon, umfassend ein Schlauchelement (11) mit einem Schlauchhalter (12) und einem davon abrollbaren bzw. darauf aufrollbaren Schlauch (13), wobei ein Versorgungsende des Schlauches (13) zum Verbinden mit einem Wasserversorgungssystem und das gegenüberliegende Anschlussende (14) des Schlauches (13) zum Anschließen an eine Rohrkonstruktion (15), die mindestens eine Reinigungsdüse (16) aufweist, ausgebildet und eingerichtet ist, und das Anschlussende (14) des Schlauches (13) aus einer Warteposition, in der das Anschlussende (14) des Schlauches (13) von der zu reinigenden Maschine (20) oder Teilen davon entkoppelt ist, in eine Betriebsposition, in der das Anschlussende (14) des Schlauches (13) mit der zu reinigenden Maschine (20) oder Teilen davon verbunden ist, und zurück bewegbar ist, **dadurch gekennzeichnet, dass** die Rohrkonstruktion (15) Bestandteil der Reinigungsvorrichtung (10) ist, derart, dass die Rohrkonstruktion (15) sowohl im Betriebsmodus der Maschine (20) als auch im Reinigungsmodus der Maschine (20) mit dem Anschlussende (14) des Schlauches (13) verbunden ist, wobei die Rohrkonstruktion (15) zum lösbaren Befestigen innerhalb einer Maschine (20) ausgebildet und eingerichtet ist und zusammen mit dem Anschlussende (14) des Schlauches (13) aus der Warteposition in die Betriebsposition und zurück bewegbar ist, wobei der Rohrkonstruktion (15) Befestigungsmittel zum lösbaren Befestigen an der oder innerhalb der zu reinigenden Maschine (20) oder Teilen davon zugeordnet sind, wobei die Befestigungsmittel maschinenunabhängig sind.

2. Reinigungsvorrichtung (10) nach Anspruch 1, **dadurch gekennzeichnet, dass** die Rohrkonstruktion (15) fest aber lösbar mit dem Anschlussende (14) des Schlauches (13) verbunden und in der Warteposition zusammen mit dem freien Ende des Schlauches (13) frei bewegbar ausgebildet ist.

3. Reinigungsvorrichtung (10) nach Anspruch 1 oder 2, **dadurch gekennzeichnet, dass** die Rohrkonstruktion (15) mindestens ein Reinigungsrohr (18) und mindestens eine Reinigungsdüse (16) umfasst.

4. Reinigungsvorrichtung (10) nach einem oder mehreren der Ansprüche 1 bis 3, **dadurch gekennzeichnet, dass** die Rohrkonstruktion (15) mehrere Reinigungsrohre (18) und mehrere Reinigungsdüsen (16) umfasst.

5. Reinigungsvorrichtung (10) nach einem oder mehreren der Ansprüche 1 bis 4, **dadurch gekennzeichnet, dass** die Rohrkonstruktion (15) modular ausgebildet bzw. aufgebaut ist, derart, dass sie bezüglich der Anzahl der Reinigungsrohre (18) und/oder der Anzahl der Reinigungsdüsen (16) sowie der Position und/oder Ausrichtung derselben variabel ist.

6. Reinigungsvorrichtung (10) nach einem oder mehreren der Ansprüche 3 bis 5, **dadurch gekennzeichnet, dass** die oder jede Reinigungsdüse (16) bewegbar an dem oder jedem Reinigungsrohr (18) angeordnet ist, derart, dass deren Position und/oder Ausrichtung variabel einstellbar ist.

7. Reinigungsvorrichtung (10) nach Anspruch 1, **dadurch gekennzeichnet, dass** das Befestigungsmittel einen Steck- und/oder Klemmmechanismus umfasst, der zum lösbaren Fixieren der Rohrkonstruktion (15) an der oder in der Maschine (20) oder Teilen davon ausgebildet und eingerichtet ist.

8. Reinigungsvorrichtung (10) nach einem oder mehreren der Ansprüche 1 bis 7, **dadurch gekennzeichnet, dass** die Rohrkonstruktion (15) Befestigungsmittel aufweist, die ausgebildet und eingerichtet sind, mit korrespondierenden Befestigungsmitteln, die an oder in der Maschine (20) oder Teilen davon angeordnet sind, zusammenzuwirken.

9. Reinigungsvorrichtung (10) nach einem oder mehreren der Ansprüche 1 bis 8, **dadurch gekennzeichnet, dass** der Schlauchhalter (12) einen Schlauchrollmechanismus aufweist, wobei der Schlauchrollmechanismus einen Rückholer und einen Gewichtsausgleicher umfasst.

10. Verwendung einer Reinigungsvorrichtung (10) nach einem oder mehreren der Ansprüche 1 bis 9 in einer Maschine (20) zur Be- und/oder Verarbeitung von Geflügel oder Fisch sowie Teilen davon.

11. Anordnung (21), umfassend mindestens eine Maschine (20) zur Be- und/oder Verarbeitung von Geflügel oder Fisch sowie Teilen davon, sowie mindestens eine Reinigungsvorrichtung (10) zur Reinigung der Maschine (20) oder Teilen davon, **dadurch gekennzeichnet, dass** die Reinigungsvorrichtung (10) nach einem oder mehreren der Ansprüche 1 bis 9 ausgebildet und eingerichtet ist.

12. Anordnung (21) nach Anspruch 11, **dadurch gekennzeichnet, dass** die Maschine (20) oder Teile davon Befestigungsmittel umfassen, die zum lösbaren Fixieren der Rohrkonstruktion (15) der Reinigungsvorrichtung (10) an der oder in der Maschine (20) oder Teilen davon ausgebildet und eingerichtet sind.

13. Verfahren zum Reinigen einer Maschine (20) zur Be- und/oder Verarbeitung von Geflügel oder Fisch sowie Teilen davon, **gekennzeichnet durch** die Schritte:
- Versetzen der Maschine (20) aus einem Betriebsmodus in einen Reinigungsmodus,
- Positionieren und Fixieren einer über ein Schlauchelement (11) an ein Wasserversorgungssystem angeschlossenen Rohrkonstruktion (15) an oder in der Maschine (20) oder Teilen davon, indem die Rohrkonstruktion (15) aus einer außerhalb der Maschine (20) befindlichen Warteposition in die innerhalb der Maschine (20) befindliche Betriebsposition bewegt wird,
- Durchführen des Reinigungsprozesses,
- Lösen und Entfernen der Rohrkonstruktion (15) aus der Maschine (20), indem die Rohrkonstruktion (15) aus der Betriebsposition in die Warteposition zurückbewegt wird, und
- Versetzen der Maschine (20) aus dem Reinigungsmodus in den Betriebsmodus.

14. Verfahren nach Anspruch 13, **dadurch gekennzeichnet, dass** dieses mit einer Reinigungsvorrichtung (10) nach einem oder mehreren der Ansprüche 1 bis 9 ausgeführt wird.

## Claims

1. Cleaning apparatus (10), configured and adapted for cleaning machines (20) or parts thereof, comprising a hose element (11) with a hose holder (12) and a hose (13) which can be unrolled from or rolled onto it, wherein a supply end of the hose (13) is configured and adapted for connecting to a water supply system and the opposing connecting end (14) of the hose (13) is configured and adapted for connecting to a pipe construction (15) which has at least one cleaning nozzle (16), and the connecting end (14) of the hose (13) can be moved from a standby position, in which the connecting end (14) of the hose (13) is uncoupled from the machine (20) to be cleaned or parts thereof, to an operating position, in which the connecting end (14) of the hose (13) is connected to the machine (20) to be cleaned or parts thereof, and back, **characterised in that** the pipe construction (15) is part of the cleaning device (10), in such a manner that the pipe construction (15) is connected to the connecting end (14) of the hose (13) both in the operating mode of the machine (20) and in the cleaning mode of the machine (20), wherein the pipe construction (15) is configured and adapted for releasable attachment inside a machine (20) and can be moved together with the connecting end (14) of the hose (13) from the standby position to the operating position and back, wherein the pipe construction (15) is associated with fastening means for releasable attachment to or inside the machine (20) to be cleaned or parts thereof, wherein the fastening means are independent of the machine.

2. Cleaning apparatus (10) according to claim 1, **characterised in that** the pipe construction (15) is firmly but releasably connected to the connecting end (14) of the hose (13) and is configured to be freely movable together with the free end of the hose (13) in the standby position.

3. Cleaning apparatus (10) according to claim 1 or 2, **characterised in that** the pipe construction (15) comprises at least one cleaning pipe (18) and at least one cleaning nozzle (16).

4. Cleaning apparatus (10) according to one or more of claims 1 to 3, **characterised in that** the pipe construction (15) comprises a plurality of cleaning pipes (18) and a plurality of cleaning nozzles (16).

5. Cleaning apparatus (10) according to one or more of claims 1 to 4, **characterised in that** the pipe construction (15) is of modular configuration or construction, in such a manner that it is variable with respect to the number of cleaning pipes (18) and/or the number of cleaning nozzles (16) and the position and/or orientation thereof.

6. Cleaning apparatus (10) according to one or more of claims 3 to 5, **characterised in that** the or each cleaning nozzle (16) is movably arranged on the or each cleaning pipe (18), in such a manner that its position and/or orientation is variably adjustable.

7. Cleaning apparatus (10) according to claim 1, **characterised in that** the fastening means comprises a plug-in and/or clamping mechanism which is configured and adapted for releasably fixing the pipe construction (15) to or in the machine (20) or parts thereof.

8. Cleaning device (10) according to one or more of claims 1 to 7, **characterised in that** the pipe construction (15) has fastening means which are configured and adapted to cooperate with corresponding fastening means which are arranged on or in the machine (20) or parts thereof.

9. Cleaning apparatus (10) according to one or more of claims 1 to 8, **characterised in that** the hose holder (12) has a hose winding mechanism, wherein the hose winding mechanism comprises a retraction mechanism and a spring balancer.

10. Use of a cleaning apparatus (10) according to one or more of claims 1 to 9 in a machine (20) for handling and/or processing poultry or fish or parts thereof.

11. Arrangement (21), comprising at least one machine (20) for handling and/or processing poultry or fish and parts thereof, and at least one cleaning apparatus (10) for cleaning the machine (20) or parts thereof, **characterised in that** the cleaning apparatus (10) is configured and adapted according to one or more of claims 1 to 9.

12. Arrangement (21) according to claim 11, **characterised in that** the machine (20) or parts thereof comprise fastening means which are configured and adapted for releasably fixing the pipe construction (15) of the cleaning apparatus (10) to or in the machine (20) or parts thereof.

13. Method for cleaning a machine (20) for handling and/or processing poultry or fish and parts thereof, **characterised by** the steps:
- Switching the machine (20) from an operating mode to a cleaning mode,
- Positioning and fixing a pipe construction (15), which is connected to a water supply system via a hose element (11), to or in the machine (20) or parts thereof by moving the pipe construction (15) from a standby position located outside the machine (20) to the operating position located inside the machine (20),
- Carrying out the cleaning process,
- Releasing and removing the pipe construction (15) from the machine (20) by moving the pipe construction (15) from the operating position back to the standby position, and
- Switching the machine (20) from the cleaning mode to the operating mode.

14. Method according to claim 13, **characterised in that** said method is carried out with a cleaning apparatus (10) according to one or more of claims 1 to 9.

## Revendications

1. Dispositif de nettoyage (10), configuré et adapté pour nettoyer des machines (20) ou des parties de celles-ci, comprenant un élément de tuyau (11) avec un support de tuyau (12) et un tuyau (13) qui peut être déroulé de celui-ci ou qui peut être enroulé sur celui-ci, une extrémité d'alimentation du tuyau (13) étant configurée et adaptée pour être raccordée à un système d'alimentation en eau et l'extrémité de raccordement opposée (14) du tuyau (13) étant configurée et adaptée pour être raccordée à une structure tubulaire (15) qui présente au moins une buse de nettoyage (16), et l'extrémité de raccordement (14) du tuyau (13) pouvant être déplacée d'une position d'attente, dans laquelle l'extrémité de raccordement (14) du tuyau (13) est découplée de la machine (20) à nettoyer ou de parties de celle-ci, à une position de fonctionnement, dans laquelle l'extrémité de raccordement (14) du tuyau (13) est reliée à la machine (20) à nettoyer ou à des parties de celle-ci, et inversement, **caractérisée en ce que** la structure tubulaire (15) fait partie intégrante du dispositif de nettoyage (10), de telle sorte que la structure tubulaire (15) est reliée à l'extrémité de raccordement (14) du tuyau (13) aussi bien dans le mode de fonctionnement de la machine (20) que dans le mode de nettoyage de la machine (20), la structure tubulaire (15) étant configurée et adaptée pour être fixée de manière amovible à l'intérieur d'une machine (20) et pouvant être déplacée, conjointement avec l'extrémité de raccordement (14) du tuyau (13), de la position d'attente à la position de fonctionnement et inversement, des moyens de fixation étant associés à la structure tubulaire (15) pour être fixés de manière amovible sur ou à l'intérieur de la machine (20) à nettoyer, ou des parties de celle-ci, les moyens de fixation étant indépendants de la machine.

2. Dispositif de nettoyage (10) selon la revendication 1, **caractérisé en ce que** la structure tubulaire (15) est reliée de manière fixe mais amovible à l'extrémité de raccordement (14) du tuyau (13) et est configurée pour se déplacer librement conjointement avec l'extrémité libre du tuyau (13) dans la position d'attente.

3. Dispositif de nettoyage (10) selon la revendication 1 ou 2, **caractérisé en ce que** la structure tubulaire (15) comprend au moins un tube de nettoyage (18) et au moins une buse de nettoyage (16).

4. Dispositif de nettoyage (10) selon une ou plusieurs des revendications 1 à 3, **caractérisé en ce que** la structure tubulaire (15) comprend plusieurs tubes de nettoyage (18) et plusieurs buses de nettoyage (16).

5. Dispositif de nettoyage (10) selon une ou plusieurs des revendications 1 à 4, **caractérisé en ce que** la structure tubulaire (15) est configurée ou construite sous forme modulaire, de telle sorte qu'elle est variable en ce qui concerne le nombre de tubes de nettoyage (18) et/ou le nombre de buses de nettoyage (16) ainsi que la position et/ou l'orientation de ceux-ci.

6. Dispositif de nettoyage (10) selon une ou plusieurs des revendications 3 à 5, **caractérisé en ce que** la ou chaque buse de nettoyage (16) est agencée de manière mobile sur le ou chaque tube de nettoyage (18) de manière à ce que sa position et/ou son orientation soit réglable de manière variable.

7. Dispositif de nettoyage (10) selon la revendication 1, **caractérisé en ce que** le moyen de fixation comprend un mécanisme d'emboîtement et/ou de serrage configuré et adapté pour fixer de manière amovible la structure tubulaire (15) sur ou dans la machine (20) ou des parties de celle-ci.

8. Dispositif de nettoyage (10) selon une ou plusieurs des revendications 1 à 7, **caractérisé en ce que** la structure tubulaire (15) présente des moyens de fixation configurés et adaptés pour coopérer avec des moyens de fixation correspondants agencés sur ou dans la machine (20) ou des parties de celle-ci.

9. Dispositif de nettoyage (10) selon une ou plusieurs des revendications 1 à 8, **caractérisé en ce que** le support de tuyau (12) présente un mécanisme d'enroulement de tuyau, le mécanisme d'enroulement de tuyau comprenant un dispositif de rappel et un dispositif d'équilibrage de poids.

10. Utilisation d'un dispositif de nettoyage (10) selon une ou plusieurs des revendications 1 à 9 dans une machine (20) de traitement et/ou de transformation de volailles ou de poissons ainsi que de parties de ceux-ci.

11. Agencement (21), comprenant au moins une machine (20) pour le traitement et/ou la transformation de volailles ou de poissons ainsi que de parties de ceux-ci, ainsi qu'au moins un dispositif de nettoyage (10) pour le nettoyage de la machine (20) ou de parties de celle-ci, **caractérisé en ce que** le dispositif de nettoyage (10) est configuré et adapté selon une ou plusieurs des revendications 1 à 9.

12. Agencement (21) selon la revendication 11, **caractérisé en ce que** la machine (20) ou des parties de celle-ci comprennent des moyens de fixation configurés et adaptés pour fixer de manière amovible la structure tubulaire (15) du dispositif de nettoyage (10) sur ou dans la machine (20) ou des parties de celle-ci.

13. Procédé de nettoyage d'une machine (20) pour le traitement et/ou la transformation de volailles ou de poissons ainsi que de parties de ceux-ci, **caractérisé par** les étapes suivantes :
- le passage de la machine (20) d'un mode de fonctionnement à un mode de nettoyage,
- le positionnement et la fixation d'une structure tubulaire (15) raccordée à un système d'alimentation en eau par l'intermédiaire d'un élément de tuyau (11) sur ou dans la machine (20) ou des parties de celle-ci, en déplaçant la structure tubulaire (15) d'une position d'attente se trouvant à l'extérieur de la machine (20) à la position de fonctionnement se trouvant à l'intérieur de la machine (20),
- l'exécution du processus de nettoyage,
- la libération et le retrait de la structure tubulaire (15) de la machine (20) en déplaçant la structure tubulaire (15) de la position de fonctionnement à la position d'attente, et
- le passage de la machine (20) du mode de nettoyage au mode de fonctionnement.

14. Procédé selon la revendication 13, **caractérisé en ce que** celui-ci est réalisé avec un dispositif de nettoyage (10) selon une ou plusieurs des revendications 1 à 9.
